# EUROPEAN PATENT APPLICATION

(11) **EP 4 760 098 A1**
(43) Date of publication of application: **17.06.2026**
(21) Application number: 25214637.8
(22) Date of filing: 10.11.2025
(51) Int. Cl.: F04B 39/10, F04B 41/06, F04B 49/22, F04C 28/02, F04C 28/24, F16K 31/06, F16K 3/02, F04B 39/02, F16K 31/122

(54) **SUCTION PRESSURE REGULATING VALVE AND PARALLEL COMPRESSOR SYSTEM**

(30) Priority: 12.12.2024 CN 202411832690
(71) Applicant: Danfoss (Tianjin) Ltd., Tainjin 301700 (CN)
(72) Inventor: LIU, Peng, Nordborg (DK); DONG, Ying, Nordborg (DK); ZHOU, Xiaojing, Nordborg (DK); FAN, Liang, Nordborg (DK); WANG, Tao, Nordborg (DK)
(74) Representative: Patentanwälte Olbricht Buchhold Keulertz

(57) **Abstract**

A suction pressure regulating valve comprises a valve body (9) having a suction channel (11) for communicating with a suction port (301) of a compressor (30), a valve core (3) disposed in the valve body (9) and allowed to extend into and retract from the suction channel (11) to change a flow area of the suction channel (11), and a rotating member (4) rotatably connected to the valve body (9) and cooperating with the valve core (3), wherein the rotating member (4) is configured to rotate relative to the valve body (9) so as to drive the valve core (3) to extend into and retract from the suction channel (11). The suction pressure regulating valve enables real-time flow control in accordance with different working conditions. A parallel compressor system comprises a plurality of compressors (30), a pressure sensor (20) for sensing an internal pressure chamber of a compressor (30), and a suction pressure regulating valve in communication with a suction port (301) of a compressor, such that the suction flow is regulated according to the sensing value of the pressure sensor (20).

## Description

### TECHNICAL FIELD

The present disclosure relates to a technical field of air conditioning systems, in particular to a suction pressure regulating valve and a parallel compressor system.

### BACKGROUND

Compressor parallel technology is increasingly widely applied to the air conditioning and refrigeration industry, with advantages such as convenient energy regulation, high efficiency, convenient shutdown and maintenance of a single unit, and low cost. When a plurality of compressors are connected in parallel, in order to prevent the compressors from operating without oil or with insufficient oil, an oil level sensor is usually installed on an oil sump of the compressor. When the oil level in the oil sump of the compressor is lower than the position of the oil level sensor, the compressor will shut down for protection; and when the oil level returns to be above the action position of the oil level sensor, the compressor will restart operation.

However, the problem with this method of protecting the oil level is that the compressor may only rely on a shutdown system to migrate oil or depend on another operating compressor to carry oil back to the shutdown compressor, resulting in large fluctuations in the operation of the entire system. The shutdown of the compressor also causes a decrease in the performance of the system, which may not meet the load demand. In addition, the pressure in the internal pressure chamber of the shutdown compressor in the parallel system is higher than the pressure of the operating compressor, making it difficult for the lubricating oil in the oil-rich compressor to be pressed into the shutdown oil-deficient compressor, resulting in the oil-deficient compressor being shut down for a long time and failing to start.

### SUMMARY

In view of this, the present disclosure provides a suction pressure regulating valve and a parallel compressor system, which may solve the problem that the compressor shuts down due to oil deficiency for a long period and thus cannot be started.

In order to achieve the above-mentioned objective, the present disclosure provides the following technical solutions.

A suction pressure regulating valve, comprising:
a valve body having a suction channel for communicating with a suction port of a compressor;
a valve core disposed in the valve body and allowed to extend into and retract from the suction channel to change a flow area of the suction channel; and
a driving structure disposed between the valve body and the valve core, wherein the valve core is caused to extend into the suction channel in a case that the driving structure is in a first state and the valve core is caused to retract from the suction channel in a case that the driving structure is in a second state.

Optionally, the valve body comprises:
a three-way valve seat having two straight-through ports and one side port, wherein the suction channel is formed between the two straight-through ports; and
a valve sleeve, which is sleeved on an outer periphery of the valve core and connected to the side port of the three-way valve seat such that the valve core extends into and retracts from the suction channel through the side port.

Optionally, a first sealing structure surrounding the valve core is provided between the valve sleeve and the three-way valve seat; and
a second sealing structure surrounding the valve core is provided between the valve sleeve and the valve core.

Optionally, the valve core has a plate portion, which is allowed to extend into and retract from the suction channel to change the flow area of the suction channel.

Optionally, the plate portion is perpendicular to a flow direction of the suction channel.

Optionally, the driving structure comprises:
a high-pressure interface disposed on the valve body, wherein the high-pressure interface is in communication with one side of the valve core, and is configured for communicating with an exhaust port of the compressor, so as to drive the valve core to extend into the suction channel through a high air pressure in the high-pressure interface; and
a first elastic member disposed between the valve core and the valve body and allowed to drive the valve core to retract from the suction channel.

Optionally, a sliding channel is provided in the valve body, a first end of the sliding channel is in communication with the high-pressure interface, and a second end of the sliding channel is in communication with the suction channel; the valve core has a core portion slidably fitted with the sliding channel, and the first elastic member is located between the core portion and the second end of the sliding channel and is allowed to drive the core portion to move to the first end of the sliding channel.

Optionally, a third sealing structure surrounding the high-pressure interface is provided between an end face of the core portion close to the high-pressure interface and the valve body, so as to allow the valve core to block the sliding channel and the high-pressure interface under an action of the first elastic member.

Optionally, a fourth sealing structure is provided between the core portion and a side wall of the sliding channel; and
a pressure relief channel is provided on the core portion, a first end of the pressure relief channel is located between the fourth sealing structure and the third sealing structure, and a second end of the pressure relief channel is located on a side of the fourth sealing structure away from the third sealing structure, so as to release the high air pressure of the high-pressure interface to the suction channel in a case that the driving structure is in the second state.

Optionally, the first end of the pressure relief channel is located on an end face of the core portion close to the high-pressure interface and located outside the third sealing structure; and the second end of the pressure relief channel is located on an end face of the core portion away from the high-pressure interface.

Optionally, the driving structure comprises:
an electromagnetic assembly having a first magnetic pole and a second magnetic pole, wherein the first magnetic pole is disposed on the valve core, the second magnetic pole is disposed on the valve body, and the electromagnetic assembly is energized to make the first magnetic pole and the second magnetic pole approach each other; and
a second elastic member disposed between the valve core and the valve body and allowed to drive the first magnetic pole and the second magnetic pole to move away from each other,
wherein the valve core extends into the suction channel in a case that the first magnetic pole and the second magnetic pole approach or move away from each other.

Optionally, the first magnetic pole, the second magnetic pole and the second elastic member are all located on a side of the valve core away from the suction channel, and the second elastic member is located between the first magnetic pole and the second magnetic pole.

A parallel compressor system, comprising a plurality of parallel compressors, wherein a suction port of each of the compressors is in communication with the suction pressure regulating valve according to any one of the above items.

Optionally, the parallel compressor system comprises an oil level sensor and a solenoid valve, wherein the oil level sensor is disposed on the compressor and configured for detecting an oil level of the compressor;
the driving structure has a high-pressure interface, which is in communication with an exhaust port of the compressor through the solenoid valve, and the solenoid valve is in communication connection with the oil level sensor to control an on-off of the solenoid valve according to a sensing value of the oil level sensor.

Optionally, the parallel compressor system comprises an oil level sensor disposed on the compressor and configured for detecting an oil level of the compressor,
wherein the driving structure has an electromagnetic assembly, which is in communication connection with the oil level sensor to control an on-off of the electromagnetic assembly according to a sensing value of the oil level sensor.

According to the suction pressure regulating valve and the parallel compressor system provided by the present disclosure, in use, the suction pressure regulating valve is installed at the suction port of the compressor. By switching the driving structure between the first state and the second state, the valve core may be caused to extend into and retract from the suction channel of the valve body, which may change the flow area of the suction channel, thereby regulating the suction flow at the suction port of the compressor and regulating the pressure in the internal pressure chamber of the compressor. In this way, by using the suction pressure regulating valve, real-time regulation may be made according to different working conditions or flows, which may allow the compressor to achieve a good pressure equalization effect under various working conditions without repeated disassembly and assembly of pipelines for debugging, and have superior reliability and safety.

### BRIEF DESCRIPTION OF THE DRAWINGS

In order to more clearly illustrate embodiments of the present disclosure or the technical solutions in the prior art, the drawings required to be used in the description of the embodiments or the prior art will be briefly described below. It is apparent that the drawings in the following description are only embodiments of the present disclosure, and other drawings may be obtained by those of ordinary skill in the art according to the provided drawings without creative labor.
FIG. 1 shows a cross-sectional view of a suction pressure regulating valve according to a first embodiment of the present disclosure;
FIG. 2 shows a cross-sectional view of a suction pressure regulating valve according to a second embodiment of the present disclosure;
FIG. 3 shows a perspective view of a valve core according to some embodiments of the present disclosure;
FIG. 4 shows a perspective view of a three-way valve seat according to some embodiments of the present disclosure;
FIG. 5 shows a schematic diagram of a parallel compressor system according to some embodiments of the present disclosure; and
FIG. 6 shows a schematic diagram of a parallel compressor system according to other embodiments of the present disclosure.

In the figures:
1. Three-way valve seat; 11. Suction channel; 12. Side port; 13. Straight-through port; 2. Valve sleeve; 21. High-pressure interface; 22. Sliding channel; 3. Valve core; 31. Core portion; 32. Plate portion; 33. Rod portion; 34. Pressure relief channel; 4. First elastic member; 5. Second elastic member; 6. Electromagnetic assembly; 61. First magnetic pole; 62. Second magnetic pole; 63. Electromagnetic coil; 7. First sealing structure; 8. Second sealing structure; 9. Third sealing structure; 10. Suction pressure regulating valve; 101. Valve body; 102. Driving structure; 20. Oil level sensor; 30. Solenoid valve; 40. Compressor; 401. Suction port; 402. Exhaust port.

### DETAILED DESCRIPTION OF EMBODIMENTS

Technical solutions in embodiments of the present disclosure will be described clearly and completely with reference to the accompanying drawings in embodiments of the present disclosure. It is obvious that the embodiments described are only some embodiments of the present disclosure, rather than all embodiments. All other embodiments, which may be derived by those of ordinary skill in the art from embodiments in the present disclosure without creative labor, are intended to fall within a protective scope of the present disclosure.

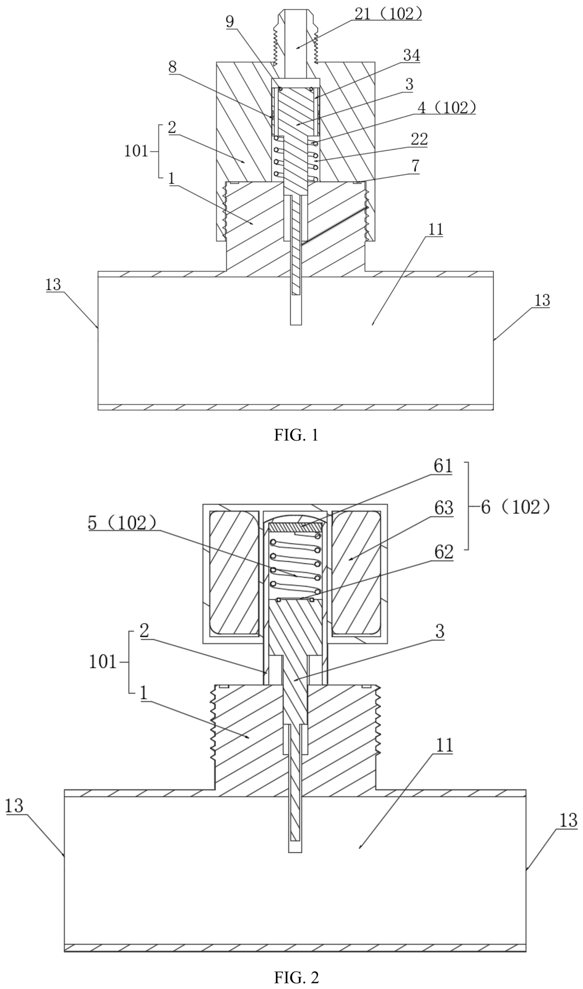

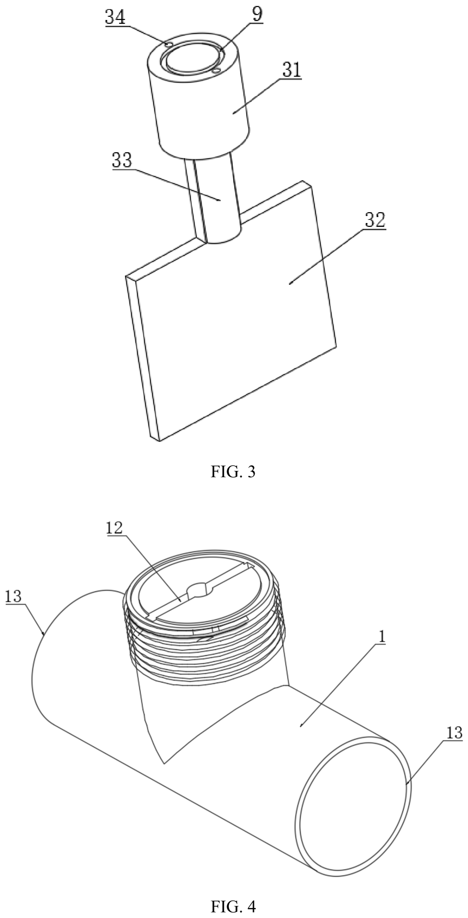

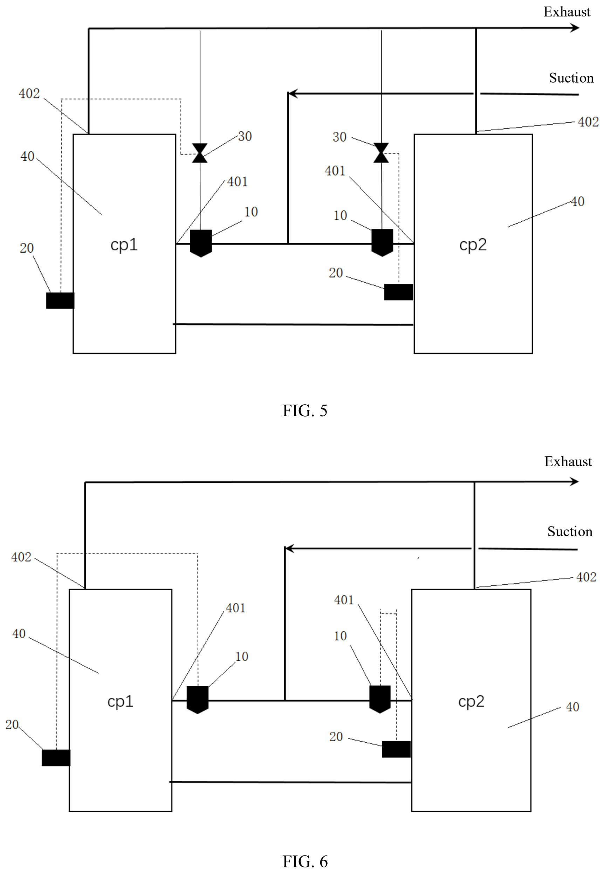

As shown in FIG. 1 to FIG. 6, embodiments of the present disclosure provide a suction pressure regulating valve 10, which comprises a valve body 101, a valve core 3, and a driving structure 102. The suction pressure regulating valve 10 is configured to be installed at a suction port 401 of a compressor 40 in a parallel unit, for example, the suction pressure regulating valve 10 is installed between the suction port 401 of the compressor 40 and a suction pipeline of the parallel unit.

A suction channel 11 is provided in the valve body 101 for communicating with the suction port 401 of the compressor 40. Specifically, the suction channel 11 has two ports, wherein one port of the two ports is connected to the suction port 401 of the compressor 40, and the other port of the two ports is connected to the suction pipeline of the parallel unit; or the suction channel 11 is disposed on the suction pipeline and close to the suction port 401 of the compressor 40, such that the suction port 401 of the compressor 40 is in communication with the suction pipeline through the suction channel 11.

The valve core 3 is movably disposed in the valve body 101. By displacing the valve core 3 relative to the valve body 101, the valve core 3 may extend into and retract from the suction channel 11 of the valve body 101, thereby changing a flow area of the suction channel 11. For example, the flow area of the suction channel 11 decreases when the valve core 3 extends into the suction channel 11; the flow area of the suction channel 11 increases when the valve core 3 retracts from the suction channel 11. The flow area of the suction channel 11 may be regulated by adjusting the position of the valve core 3 relative to the valve body 101.

The driving structure 102 is disposed between the valve body 101 and the valve core 3. Under an action of the driving structure 102, the valve core 3 may displace relative to the valve body 101, such that the valve core 3 extends into and retracts from the suction channel 11. The driving structure 102 has a first state and a second state. When the driving structure 102 is in the first state, the valve core 3 is caused to extend into the suction channel 11; and when the driving structure 102 is in the second state, the valve core 3 is caused to retract from the suction channel 11. For example, the driving structure 102 may be configured to a manual, pneumatic, or electric mode of operation.

In use, the suction pressure regulating valve 10 is installed at the suction port 401 of the compressor 40. By switching the driving structure 102 between the first state and the second state, the valve core 3 may be caused to extend into and retract from the suction channel 11 of the valve body 101, which may change the flow area of the suction channel 11, thereby regulating a suction flow at the suction port 401 of the compressor 40 and regulating a pressure in an internal pressure chamber of the compressor 40. In this way, by using the suction pressure regulating valve 10, real-time regulation may be made according to different working conditions or flows, which allows the compressor 40 to achieve a good pressure equalization effect under various working conditions without repeated disassembly and assembly of pipelines for debugging, and have superior reliability and safety.

In some embodiments, the valve body 101 comprises a three-way valve seat 1 and a valve sleeve 2. The three-way valve seat 1 has a T-shaped structure with two straight-through ports and one side port 12, and the above-mentioned suction channel 11 is formed between the two straight-through ports. During installation, the two straight-through ports are respectively connected to the suction port 401 of the compressor 40 and the suction pipeline of the parallel unit. The valve sleeve 2 is connected to the side port 12 of the three-way valve seat 1, such that an interior of the valve sleeve 2 is in communication with the suction channel 11 through the side port 12. Specifically, the valve sleeve 2 is sleeved on and threadedly connected to an outer periphery of the side port 12 to form the valve body 101.

The valve sleeve 2 is sleeved on an outer periphery of the valve core 3 to wrap the valve core 3, wherein one part of the valve core 3 is located in the valve sleeve 2, and the other part of the valve core 3 is located in the side port 12 of the three-way valve seat 1, such that the valve core 3 extends into and retracts from the suction channel 11 through the side port 12 of the three-way valve seat 1. In this way, the structure of the three-way valve seat 1 and the valve sleeve 2 helps to simplify the structure of the suction pressure regulating valve 10 and improve assembly convenience and stability of the suction pressure regulating valve 10.

A first sealing structure 7 is provided between the valve sleeve 2 and the three-way valve seat 1, and the first sealing structure 7 is disposed around the outer periphery of the valve core 3 to realize sealing between the three-way valve seat 1 and the valve body 101, thereby preventing a gas in the suction channel 11 from leaking out through a gap between the valve sleeve 2 and the three-way valve seat 1. Specifically, the first sealing structure 7 comprises at least one sealing ring. An inner wall of the valve sleeve 2 has an annular step surface that abuts against an interface of the side port 12 of the three-way valve seat 1, a sealing groove is provided on an end surface of the side port 12, and the sealing ring of the first sealing structure 7 is disposed in the sealing groove and abuts between the three-way valve seat 1 and the step surface of the valve sleeve 2.

A second sealing structure 8 is provided between the valve sleeve 2 and the valve core 3, and the second sealing structure 8 is disposed around the outer periphery of the valve core 3 to realize sealing between the valve core 3 and the valve body 101, thereby preventing the gas in the suction channel 11 from leaking out through a gap between the valve sleeve 2 and the valve core 3. Specifically, the second sealing structure 8 comprises at least one sealing ring. A sealing groove is disposed on an outer peripheral surface of the valve core 3, and the sealing ring of the second sealing structure 8 is disposed in the sealing groove and abuts between the valve core 3 and the inner wall of the valve sleeve 2. Here, the second sealing structure 8 has two sealing rings disposed in the axial direction, which further improves sealing strength around the valve core 3.

The valve core 3 has a core portion 31 and a plate portion 32, wherein the core portion 31 is located in the valve sleeve 2 and slidably connected to the inner wall of the valve sleeve 2, and the plate portion 32 is located in the side port 12 of the three-way valve seat 1 and slidably fits with an inner wall of the side port 12. The core portion 31 and the plate portion 32 are connected to each other through a rod portion 33. When the rod portion 33 is located in the valve sleeve 2, the plate portion 32 retracts from the suction channel 11; when the rod portion 33 is located in the side port 12 of the three-way valve seat 1, the plate portion 32 extends into the suction channel 11. In this way, by the plate portion 32 extending into and retracting from the suction channel 11, the flow area of the suction channel 11 may be changed and a good regulation effect may be achieved.

It will be appreciated that the internal shape of the side port 12 of the three-way valve seat 1 is consistent with the shape of the plate portion 32 of the valve core 3, that is, an interior of the side port 12 forms a rectangular groove for the sliding of the plate portion 32. The plate portion 32 of the valve core 3 and the rectangular groove in the side port 12 of the three-way valve seat 1 form the above-mentioned guiding structure to limit a rotation of the valve core 3 relative to the valve body 101.

In a specific solution, the plate portion 32 of the valve core 3 is perpendicular to a flow direction of the suction channel 11, such that the plate portion 32 of the valve core 3 may change the flow area of the suction channel 11 to the greatest extent, which is beneficial to reducing a displacement stroke of the valve core 3 relative to the valve body 101 and reducing a volume of the valve structure.

In the first embodiment, the driving structure 102 is set into a pneumatic form, comprising a high-pressure interface 21 and a first elastic member 4. The high-pressure interface 21 is disposed on the valve body 101 and located on one side of the valve core 3. Here, the high-pressure interface 21 is disposed on the side of the valve core 3 away from the suction channel 11. In use, the high-pressure interface 21 is communicated to an exhaust port of the compressor 40, and the high pressure from the exhaust port is introduced into the high-pressure interface 21, such that there is a high pressure on the side of the valve core 3 away from the suction channel 11. The high pressure drives the valve core 3 to displace relative to the valve body 101 in a direction toward the suction channel 11, such that the valve core 3 extends into the suction channel 11. The first elastic member 4 is disposed between the valve core 3 and the valve body 101, for example, the first elastic member 4 is set as a compression spring, and drives the valve core 3 to displace relative to the valve body 101 in a direction away from the suction channel 11 through an elastic restoring force of the first elastic member 4, such that the valve core 3 retracts from the suction channel 11. In this way, the pressure of the high-pressure interface 21 may be regulated by controlling the air pressures of the high-pressure interface 21 and the exhaust port of the compressor 40. When the pressure in the high-pressure interface 21 is greater than the elastic force of the first elastic member 4, the valve core 3 extends into the suction channel 11; when the pressure in the high-pressure interface 21 is less than the elastic force of the first elastic member 4, the valve core 3 retracts from the suction channel 11. In this way, using the high-pressure exhaust gas of the compressor 40 to drive the valve core to displace relative to the valve body 101 may reduce power loss, save working energy consumption, and the suction pressure regulating valve 10 has a simple structure and stable and reliable control mode.

A sliding channel 22 is provided in the valve body 101. A first end of the sliding channel 22 is in communication with the high-pressure interface 21, and a second end of the sliding channel 22 is in communication with the suction channel 11. Considering that the valve body 101 has the three-way valve seat 1 and the valve sleeve 2, the sliding channel 22 is set as an inner hole of the sliding sleeve and is in communication with the suction channel 11 through the side port 12 of the three-way valve seat 1. The valve core 3 comprises a core portion 31 and a plate portion 32, both of which are connected to each other through a rod portion 33, the core portion 31 is in sliding fit with the sliding channel 22, and the first elastic member 4 is disposed between the core portion 31 and the second end of the sliding channel 22 and may drive the core portion 31 to move to the first end of the sliding channel 22. Specifically, sizes of the side port 12 of the three-way valve seat 1 and the high-pressure interface 21 are both less than the size of the sliding channel 22, and step surfaces are formed respectively at both ends of the sliding channel 22 to limit a position of the core portion 31 at both ends of the sliding channel 22. When the core portion 31 is located at the first end of the sliding channel 22, the rod portion 33 retracts from the side port 12, and the plate portion 32 retracts from the suction channel 11; when the core portion 31 is located at the second end of the sliding channel 22, the rod portion 33 extends into the side port 12, and the plate portion 32 extends into the suction channel 11. The first elastic member 4 is set as a compression spring and sleeved on an outer periphery of the rod portion 33, with one end of the compression spring abutting against the core portion 31 and the other end of the compression spring abutting against the end surface of the side port 12.

A third sealing structure 9 is provided between the core portion 31 and the valve body 101, and the third sealing structure 9 is disposed on the end surface of the core portion 31 close to the high-pressure interface 21 and surrounds an outer periphery of the high-pressure interface 21. When no high air pressure is introduced into the high-pressure interface 21, the first elastic member 4 drives the core portion 31 to abut against the first end of the sliding channel 22. Under the action of the third sealing structure 9, a communication between the sliding channel 22 and the high-pressure interface 21 may be blocked, thereby isolating the suction channel 11 from the high-pressure interface 21. For example, the third sealing structure 9 may be provided with a sealing ring, a sealing groove is provided on the end surface of the core portion 31 close to the high-pressure interface 21, and the sealing ring of the third sealing structure 9 is disposed in the sealing groove and abuts against the valve body 101.

A fourth sealing structure is provided between the core portion 31 and the side wall of the sliding channel 22, and the fourth sealing structure is disposed around the outer periphery of the core portion 31 to achieve sealing between the core portion 31 and the valve body 101, thereby preventing the gas in the suction channel 11 from leaking out through the gap between the valve sleeve 2 and the core portion. Here, the fourth sealing structure is the above-mentioned second sealing structure 8.

A pressure relief channel 34 is provided on the core portion 31. A first end of the pressure relief channel 34 is located between the second sealing structure 8 and the third sealing structure 9, and a second end of the pressure relief channel 34 is located on a side of the second sealing structure 8 away from the third sealing structure 9. When the driving structure 102 is in the first state, the high air pressure in the high-pressure interface 21 drives the core portion 31 to approach the second end of the sliding channel 22 while the plate portion 32 extends into the suction channel 11. The pressure relief channel 34 may be communicated with the high-pressure interface 21 and the suction channel 11. Since the pressure exerted by the high air pressure in the high-pressure interface 21 on the core portion 31 is large, the gas in the high-pressure interface 21 will not affect the position of the core portion when passing through the pressure relief channel 34 on the core portion 31, such that the core portion 31 is maintained at the second end of the sliding channel 22. When the driving structure 102 is in the second state, the high-pressure interface 21 is in communication with the exhaust port of the compressor 40, and the high-pressure interface 21 still has high air pressure therein, which may flow to the suction channel 11 through the pressure relief channel 34, such that the pressures on two opposite sides of the core portion 31 are balanced. This allows that the first elastic member 4 drives the core portion 31 to move to the first end of the sliding channel 22, and sealing is performed through the third sealing structure 9. In this way, by the arrangement of the pressure relief channel 34, the stability and reliability of the movement of the valve core 3 relative to the valve body 101 may be improved.

Specifically, the first end of the pressure relief channel 34 is disposed on the end surface of the core portion 31 close to the high-pressure interface 21, and the second end of the pressure relief channel 34 is located on the end surface of the core portion 31 away from the high-pressure interface 21, such that the pressure relief channel 34 penetrates the core portion 31, which is convenient for processing and has a stable structure. The first end of the pressure relief channel 34 is outside the third sealing structure 9. When the core portion 31 is located at the first end of the sliding channel 22, the third sealing structure 9 may block the communication between the pressure relief channel 34 and the high-pressure channel, ensuring the isolation of the suction channel 11 and the high-pressure interface 21.

In the second embodiment, the driving structure 102 is set into an electric form, comprising an electromagnetic assembly 6 and a second elastic member 5. The electromagnetic assembly 6 comprises a first magnetic pole 61 and a second magnetic pole 62. The first magnetic pole 61 is disposed on the valve core 3, and the second magnetic pole 62 is disposed on the valve body 101. The electromagnetic assembly 6 is energized to make the first magnetic pole 61 and the second magnetic pole 62 approach each other. For example, the first magnetic pole 61 is set as a static iron core, and the second magnetic pole 62 is set as a moving iron core. When the electromagnetic coil 63 is energized, the moving iron core may receive a magnetic force and displace toward the static iron core. The second elastic member 5 is disposed between the valve core 3 and the valve body 101 and may drive the first magnetic pole 61 and the second magnetic pole 62 to move away from each other. In this way, the electromagnetic assembly 6 and the second elastic member 5 respectively act on the valve core 3 in opposite directions, which may achieve bidirectional displacement of the valve core 3 relative to the valve body 101.

In the embodiment, the suction pressure regulating valve 10 may be set as a normally closed type. The first magnetic pole 61, the second magnetic pole 62, and the second elastic member 5 are all located on the side of the valve core 3 away from the suction channel 11, and the second elastic member 5 is located between the first magnetic pole 61 and the second magnetic pole 62. When the electromagnetic assembly 6 is energized, the first magnetic pole 61 and the second magnetic pole 62 approach each other, the second elastic member 5 is compressed while the valve core 3 retracts from the suction channel 11; when the electromagnetic assembly 6 is de-energized, a magnetic attraction force between the first magnetic pole 61 and the second magnetic pole 62 disappears, the second elastic member 5 drives the first magnetic pole 61 and the second magnetic pole 62 to move away from each other while the valve core 3 extends into the suction channel 11. At this point, the suction pressure regulating valve 10 is in a regulating state, thereby realizing rapid oil equalization between the compressors 40.

In addition, the suction pressure regulating valve 10 may also be set as a normally open type. The first magnetic pole 61, the second magnetic pole 62, and the second elastic member 5 are all located on the side of the valve core 3 (the valve core 3 has a core portion 31, a plate portion 32, and a rod portion 33; herein referring to the core portion 31) close to the suction channel 11, and the second elastic member 5 is located between the first magnetic pole 61 and the second magnetic pole 62. When the electromagnetic assembly 6 is energized, the first magnetic pole 61 and the second magnetic pole 62 approach each other, the second elastic member 5 is compressed while the valve core 3 extends into the suction channel 11; when the electromagnetic assembly 6 is de-energized, the magnetic attraction force between the first magnetic pole 61 and the second magnetic pole 62 disappears, the second elastic member 5 drives the first magnetic pole 61 and the second magnetic pole 62 to move away from each other while the valve core 3 retracts from the suction channel 11.

Embodiments of the present disclosure further provide a parallel compressor system of compressors 40, which comprises the compressors 40 and suction pressure regulating valves 10. A plurality of compressors 40 are disposed in parallel; for example, two, three, or four compressors 40 may be connected in parallel. The suction pressure regulating valve 10 is the suction pressure regulating valve 10 in the above-mentioned embodiments, and is installed at the suction port 401 of the compressor 40, for example, the suction pressure regulating valve 10 is installed between the suction port 401 of the compressor 40 and the suction pipeline, such that the suction port 401 of the compressor 40 is in communication with the suction pipeline through the suction pressure regulating valve 10. In this way, by using the suction pressure regulating valve 10, real-time regulation may be made according to different working conditions or flows, which may allow the compressor 40 to achieve a good pressure equalization and oil equalization effect under various working conditions without repeated disassembly and assembly of pipelines for debugging, and have superior reliability and safety.

In some preferred solutions, the parallel compressor system of compressors 40 further comprises an oil level sensor 20 and a solenoid valve 30. The oil level sensor 20 is disposed in the compressor 40 and configured to detect an oil level of the compressor 40. The suction pressure regulating valve 10 is set into a pneumatic form and has a high-pressure interface 21. The high-pressure interface 21 is in communication with the exhaust port of the compressor 40 through the solenoid valve 30, and the solenoid valve 30 is in communication connection with the oil level sensor 20 to control the on-off of the solenoid valve 30 according to the sensing value of the oil level sensor 20.

When the oil level of the compressor 40 is located above a set oil level, the oil level sensor 20 has no alarm signal. At this point, the solenoid valve 30 is in a closed state, the exhaust port of the compressor 40 is disconnected from the high-pressure interface 21 of the suction pressure regulating valve 10, and the suction pressure regulating valve 10 does not regulate the suction pressure of the compressor 40. When the oil level of one of the compressors 40 (i.e., the oil-deficient compressor 40) is located below the set oil level, the oil level sensor 20 triggers an alarm signal. At this point, after receiving the alarm signal from the oil level sensor 20, the solenoid valve 30 is in an open state, the exhaust port of the compressor 40 is in communication with the high-pressure interface 21 of the suction pressure regulating valve 10, and the suction pressure regulating valve 10 regulates the suction pressure of the compressor 40. At this point, the suction pressure of the oil-deficient compressor 40 with a low oil level decreases after being regulated by the suction pressure regulating valve 10, and the pressure in the oil sump decreases. Under the action of the pressure difference, another oil-rich compressor 40 presses a lubricating oil into the oil-deficient compressor 40 to achieve a rapid oil equalization effect. When the oil level of the oil-deficient compressor 40 returns to be above the height of the set oil level, the alarm signal of the oil level sensor 20 is canceled, the solenoid valve 30 is closed, the exhaust port of the compressor 40 is disconnected from the high-pressure interface 21 of the suction pressure regulating valve 10, and the compressor 40 returns to the state without suction regulation again. In this way, automatic oil equalization between parallel compressors 40 may be realized without shutdown, avoiding fluctuations of the system load.

In other preferred solutions, the parallel compressor system of compressors 40 comprises an oil level sensor 20, which is disposed in the compressor 40 and is configured to detect the oil level of the compressor 40. The suction pressure regulating valve 10 is set into an electric form and has an electromagnetic assembly 6, which is in communication connection with the oil level sensor 20 to control the on-off of the electromagnetic assembly 6 according to the sensing value of the oil level sensor 20. Here, the suction pressure regulating valve 10 is set as a normally closed type, and the following description will be based on this configuration.

When the oil level of the compressor 40 is located above the set oil level, the oil level sensor 20 has no alarm signal. At this point, the electromagnetic assembly 6 remains energized, the valve core 3 is located outside the suction channel 11, and the suction pressure regulating valve 10 does not regulate the suction pressure of the compressor 40. When the oil level of one of the compressors 40 (i.e., the oil-deficient compressor 40) is located below the set oil level, the oil level sensor 20 triggers an alarm signal. At this point, after receiving the alarm signal from the oil level sensor 20, the electromagnetic assembly 6 is de-energized, the second elastic member 5 drives the valve core 3 to extend into the suction channel 11, and the suction pressure regulating valve 10 regulates the suction pressure of the compressor 40. At this point, the suction pressure of the oil-deficient compressor 40 with a low oil level decreases after being regulated by the suction pressure regulating valve 10, and the pressure in the oil sump decreases. Under the action of the pressure difference, another oil-rich compressor 40 presses lubricating oil into the oil-deficient compressor 40 to achieve the effect of rapid oil equalization between the compressors 40. When the oil level of the oil-deficient compressor 40 returns to be above the height of the set oil level, the alarm signal of the oil level sensor 20 is canceled, the electromagnetic assembly 6 is energized, and the compressor 40 returns to the state without suction regulation again. In this way, automatic oil equalization between parallel compressors 40 may be realized without shutdown, avoiding fluctuations of the system load.

The basic principles of the present disclosure have been described above with reference to specific embodiments. However, it should be noted that the advantages, benefits, effects, etc., mentioned in the present disclosure are merely examples and not limitations, and these advantages, benefits, effects, etc., should not be construed as essential for each embodiment of the present disclosure. In addition, the specific details disclosed above are only for illustrative purposes and ease of understanding, not for limitation, and the above-mentioned details do not limit the present disclosure to necessarily adopt the above-mentioned specific details for implementation.

The block diagrams of devices, apparatuses, equipment, and systems involved in the present disclosure are only illustrative examples and are not intended to require or imply that the devices, apparatuses, equipment, and systems must be connected, arranged, or configured in the manner shown in the block diagrams. As those skilled in the art will recognize, these devices, apparatuses, equipment, and systems may be connected, arranged, and configured in any manner. The terms such as "including", "comprising", "having" and the like are open-ended terms, and refer to "comprising but not limited to", and may be used interchangeably therewith. The terms "or" and "and" used herein refer to the term "and/or" and may be used interchangeably therewith unless the context clearly indicates otherwise. The term "such as" used herein refers to the phrase "such as but not limited to" and may be used interchangeably therewith.

It should also be noted that in the apparatuses, equipment, and methods of the present disclosure, the components or steps may be decomposed and/or recombined. These decompositions and/or recombinations should be regarded as equivalent solutions of the present disclosure.

The above description of the disclosed aspects is provided to enable any person skilled in the art to make or use the present disclosure. Various modifications to these aspects will be readily apparent to those skilled in the art, and the general principles defined herein may be applied to other aspects without departing from the scope of the present disclosure. Therefore, the present disclosure is not intended to be limited to the aspects shown herein but is to be accorded the widest scope consistent with the principles and novel features disclosed herein.

It should be understood that the qualifiers "first", "second", "third", "fourth", "fifth", and "sixth" used in the description of embodiments of the present disclosure are only for clearer elaboration of the technical solutions and are not used to limit the protection scope of the present disclosure.

The above description has been given for illustrative and descriptive purposes. In addition, the above description is not intended to limit embodiments of the present disclosure to the forms disclosed herein. Although a plurality of example aspects and embodiments have been discussed above, those skilled in the art will recognize certain variations, modifications, changes, additions, and subcombinations thereof.

## Claims

1. A suction pressure regulating valve (10), **characterizing by** comprising:
a valve body (101) having a suction channel (11) for communicating with a suction port (401) of a compressor (40);
a valve core (3) disposed in the valve body (101) and allowed to extend into and retract from the suction channel (11) to change a flow area of the suction channel (11); and
a driving structure (102) disposed between the valve body (101) and the valve core (3), wherein the valve core (3) is caused to extend into the suction channel (11) in a case that the driving structure (102) is in a first state, and the valve core (3) is caused to retract from the suction channel (11) in a case that the driving structure (102) is in a second state.

2. The suction pressure regulating valve (10) according to claim 1, **characterizing in that** the valve body (101) comprises:
a three-way valve seat (1) having two straight-through ports (13) and one side port (12), wherein the suction channel (11) is formed between the two straight-through ports (13); and
a valve sleeve (2), which is sleeved on an outer periphery of the valve core (3) and connected to the side port (12) of the three-way valve seat (1), such that the valve core (3) extends into and retracts from the suction channel (11) through the side port (12).

3. The suction pressure regulating valve (10) according to claim 2, **characterizing in that** a first sealing structure (7) surrounding the valve core (3) is provided between the valve sleeve (2) and the three-way valve seat (1); and
a second sealing structure (8) surrounding the valve core (3) is provided between the valve sleeve (2) and the valve core (3).

4. The suction pressure regulating valve (10) according to claim 1, **characterizing in that** the valve core (3) has a plate portion (32), which is allowed to extend into and retract from the suction channel (11) to change the flow area of the suction channel (11).

5. The suction pressure regulating valve (10) according to claim 4, **characterizing in that** the plate portion (32) is perpendicular to a flow direction of the suction channel (11).

6. The suction pressure regulating valve (10) according to any one of claims 1 to 5, **characterizing in that** the driving structure (102) comprises:
a high-pressure interface (21) disposed on the valve body (101), wherein the high-pressure interface (21) is in communication with one side of the valve core (3), and is configured for communicating with an exhaust port (402) of the compressor (40), so as to drive the valve core (3) to extend into the suction channel (11) through a high air pressure in the high-pressure interface (21); and
a first elastic member (4) disposed between the valve core (3) and the valve body (101) and allowed to drive the valve core (3) to retract from the suction channel (11).

7. The suction pressure regulating valve (10) according to claim 6, **characterizing in that** a sliding channel (22) is provided in the valve body (101), a first end of the sliding channel (22) is in communication with the high-pressure interface (21), and a second end of the sliding channel (22) is in communication with the suction channel (11); the valve core (3) has a core portion (31) slidably fitted with the sliding channel (22), and the first elastic member (4) is located between the core portion (31) and the second end of the sliding channel (22) and is allowed to drive the core portion (31) to move to the first end of the sliding channel (22).

8. The suction pressure regulating valve (10) according to claim 7, **characterizing in that** a third sealing structure (9) surrounding the high-pressure interface (21) is provided between an end face of the core portion (31) close to the high-pressure interface (21) and the valve body (101), so as to allow the valve core (3) to block the sliding channel (22) and the high-pressure interface (21) under an action of the first elastic member (4).

9. The suction pressure regulating valve (10) according to claim 8, **characterizing in that** a fourth sealing structure is provided between the core portion (31) and a side wall of the sliding channel (22); and
a pressure relief channel (34) is provided on the core portion (31), a first end of the pressure relief channel (34) is located between the fourth sealing structure and the third sealing structure (9), and a second end of the pressure relief channel (34) is located on a side of the fourth sealing structure away from the third sealing structure (9), so as to release the high air pressure in the high-pressure interface (21) to the suction channel (11) in a case that the driving structure (102) is in the second state.

10. The suction pressure regulating valve (10) according to claim 9, **characterizing in that** the first end of the pressure relief channel (34) is located on an end face of the core portion (31) close to the high-pressure interface (21) and located outside the third sealing structure (9); and the second end of the pressure relief channel (34) is located on an end face of the core portion (31) away from the high-pressure interface (21).

11. The suction pressure regulating valve (10) according to any one of claims 1 to 5, **characterizing in that** the driving structure (102) comprises:
an electromagnetic assembly (6) having a first magnetic pole (61) and a second magnetic pole (62), wherein the first magnetic pole (61) is disposed on the valve core (3), the second magnetic pole (62) is disposed on the valve body (101), and the electromagnetic assembly (6) is energized to make the first magnetic pole (61) and the second magnetic pole (62) approach each other; and
a second elastic member (5) disposed between the valve core (3) and the valve body (101) and allowed to drive the first magnetic pole (61) and the second magnetic pole (62) to move away from each other,
wherein the valve core (3) extends into the suction channel (11) in a case that the first magnetic pole (61) and the second magnetic pole (62) approach or move away from each other.

12. The suction pressure regulating valve (10) according to claim 11, **characterizing in that** the first magnetic pole (61), the second magnetic pole (62) and the second elastic member (5) are all located on a side of the valve core (3) away from the suction channel (11), and the second elastic member (5) is located between the first magnetic pole (61) and the second magnetic pole (62).

13. A parallel compressor system, **characterizing by** comprising a plurality of parallel compressors (40), wherein a suction port (401) of each of the compressors (40) is in communication with the suction pressure regulating valve (10) according to any one of claims 1 to 12.

14. The parallel compressor system according to claim 13, **characterizing by** comprising an oil level sensor (20) and a solenoid valve (30), wherein the oil level sensor (20) is disposed on the compressor (40) and configured for detecting an oil level of the compressor (40);
the driving structure (102) has a high-pressure interface (21), which is in communication with an exhaust port (402) of the compressor (40) through the solenoid valve (30), and the solenoid valve (30) is in communication connection with the oil level sensor (20) to control an on-off of the solenoid valve (30) according to a sensing value of the oil level sensor (20).

15. The parallel compressor system according to claim 13, **characterizing by** comprising an oil level sensor (20) disposed on the compressor (40) and configured for detecting an oil level of the compressor (40),
wherein the driving structure (102) has an electromagnetic assembly (6), which is in communication connection with the oil level sensor (20) to control an on-off of the electromagnetic assembly (6) according to a sensing value of the oil level sensor (20).
